**Europäisches Patentamt**

**European Patent Office**

**Office européen des brevets**

(11) Publication number: **0 144 433**
**B1**

# EUROPEAN PATENT SPECIFICATION

(45) Date of publication of patent specification: **26.10.88**

(51) Int. Cl.⁴: **F 23 N 5/24**

(21) Application number: **84901435.2**

(22) Date of filing: **17.04.84**

(86) International application number:
**PCT/JP84/00194**

(87) International publication number:
**WO 84/04150 25.10.84 Gazette 84/25**

(54) **COMBUSTION APPARATUS.**

(30) Priority: **19.04.83 JP 69432/83**
**20.04.83 JP 70332/83**
**27.05.83 JP 94311/83**

(43) Date of publication of application:
**19.06.85 Bulletin 85/25**

(45) Publication of the grant of the patent:
**26.10.88 Bulletin 88/43**

(84) Designated Contracting States:
**DE FR GB**

(56) References cited:
**FR-A-2 304 033**
**FR-A-2 348 440**
**GB-A-2 065 345**
**JP-A-56 056 527**
**JP-Y-58 012 024**
**US-A-4 358 265**

(73) Proprietor: **Matsushita Electric Industrial Co., Ltd.**
**1006, Oaza Kadoma**
**Kadoma-shi Osaka-fu, 571 (JP)**

(72) Inventor: **MORI, Keiichi 2-2-25, Higashisukematsu-cho**
**Izumiotsu-shi**
**Osaka-fu 595 (JP)**
Inventor: **YAMAMOTO, Katsuhiko Midorigaokahigashi 299**
**Kuramochi-cho, Nabari-shi**
**Mie-ken 518-04 (JP)**
Inventor: **IMAJIMA, Mitsuhiro 31-11, Izumihara-cho**
**Yamatokooriyama-shi**
**Nara-ken 639-11 (JP)**
Inventor: **UCHIDA, Kuniaki**
**407-11, Kihara-cho Kashihara-shi**
**Nara-ken 634 (JP)**

(74) Representative: **Eisenführ & Speiser**
**Martinistrasse 24**
**D-2800 Bremen 1 (DE)**

Courier Press, Leamington Spa, England.

# Description

The present invention relates to a combustion apparatus comprising a burner, an oxygen concentration cell type of sensor for detecting the combustion condition of the burner, an igniting circuit for igniting said burner, an ignition detecting circuit for detecting the output of the sensor itself as an indication of the ignition of said burner.

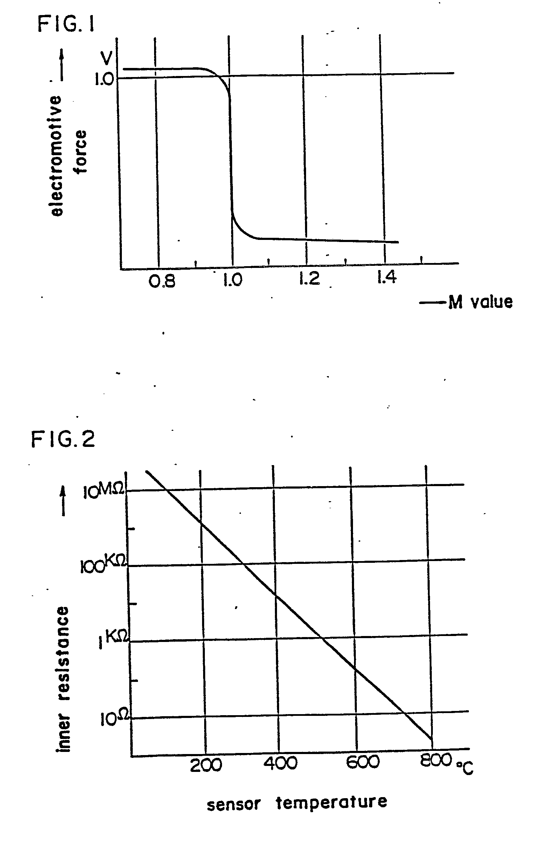

Sensors of the oxygen concentration cell type such as zirconia sensors are generally known as sensors for supervising combustion and detecting incomplete combustion in gas or other fuel burners. The main characteristic of zirconia sensors are that their electromotive force suddenly changes at an air fuel ratio (hereinafter referred to as M value) of $M \leqq 1$ as shown in Fig. 1 at high temperatures.

FR—A—23 48 440 and FR—A—23 04 033 it is known to control a burner by employment of a sensor detecting the oxygen concentration. The fuel can be either switched off upon incomplete combustion, or the air to fuel ratio is continuously controlled from the sensor.

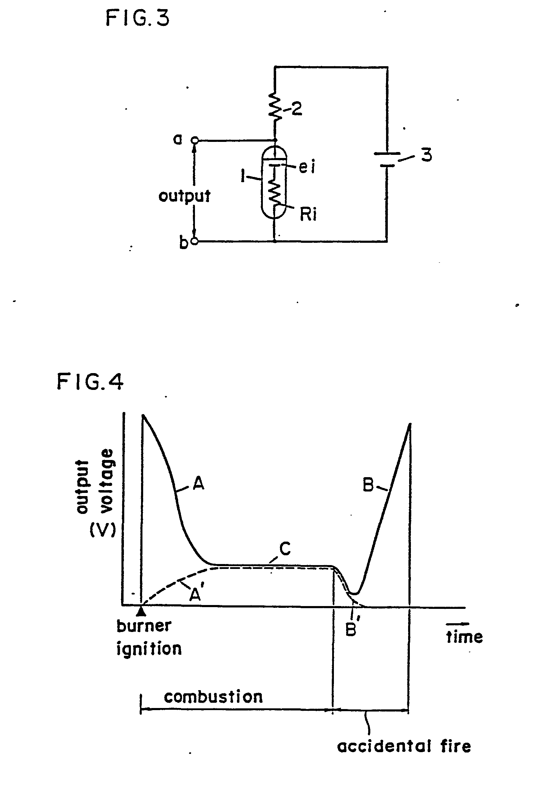

Such zirconia sensors have another important characteristic in that the inner resistance reduces due to the temperature rise as shown in Fig. 2. Accordingly, it can be used also as a sensor, by the use of the temperature characteristics, for detecting an accidental fire as well as the ignition. Fig. 3 shows one example of a detecting circuit. In the drawing, 1 is a zirconia sensor, equivalent to an electromotive force $e_i$ and an inner resistance Ri. A resistor 2 connected to a DC power supply 3 is connected in series with the zirconia sensor 1 and the whole becomes a voltage impression type sensor. Terminals a and b show detection output terminals.

Before the combustion is stated, the inner resistance Ri is several hundred megohms, which is sufficiently larger than the series resistance 2, and the output potential becomes almost the same as that of the power supply 3.

When the burner has been ignited, the inner resistance Ri lowers through the rise in temperature, becomes a value sufficiently smaller than the series resistance 2, and the divided voltage potential through the series resistance 2 and the inner resistance Ri drops as shown by a solid line A in Fig. 4 to an extremely small value. Accordingly, the detection of the decreased voltage indicates that the burner has been ignited. However, the conventional construction is uneconomical in power consumption as the voltage is normally applied to the sensor, and the power supply circuit is required to deliver a stabilized voltage to the sensor to positively detect the ignition. Because of the large range of variation of the inner resistance of the sensor, a power-supply stabilizing circuit is required, thus resulting in complicated construction and higher cost.

As a method of solving such a problem, it could be considered that no voltage should be supplied to the sensor and only the electromotive force $e_i$ of the sensor itself should be outputted. However, in this case, there is a problem because the output of the sensor does not suddenly change when the burner is ignited, so that the ignition detection becomes difficult. Namely, although the sensor is heated with the combustion heat, when the burner is ignited, to start to generate the electromotive force in the oxygen concentration cell, the electromotive force change is slight, because the combustion is performed (the broken line A' range of Fig. 4) in the normal air fuel ratio zone (hereinafter referred to as a normal M value). Accordingly, there is no change in the sensor output, which makes it difficult to distinguish between the presence and the absence of the ignition.

If in a sensor circuit with a voltage supplied to the sensor, the temperature of the sensor falls after an accidental fire occurred for some cause, the inner resistance Ri becomes 100 megohms as before the combustion, and the output potential abruptly rises as far as the approximately same value as that of the DC power supply 3 as shown with a solid line B of Fig. 4. Accordingly, an accidental fire in the burner can be detected through the detection of the voltage rise. If, however, only the changes in the electromotive force of the sensor itself are used as an accidental signal in a type of sensor circuit in which a voltage is not applied to the sensor, the electromotive force hardly changes as shown with a broken line B' of Fig. 4, when the burner is being ignited in a normal M value condition of 1.0 or more in M value. Accordingly, it is difficult in the circuit design to detect an accidental fire through the electromotive-force difference even if the electromotive force of the sensor becomes zero due to the accidental fire in the burner. So, error operations may be often caused even if the accident fire can be detected.

It is an object of the present invention to provide a combustion apparatus in which it is not necessary to supply an operating voltage to the sensor, and to reduce the production of carbon monoxide as much as possible after ignition of the burner. The time required from start to ignition to the ignition detection should be as short as possible. Furthermore, a detection of an accidental fire should still be possible.

According to the present invention, a combustion apparatus of the type defined is provided, which is characterized in that the igniting circuit is adapted to ignite the burner at an air fuel ratio lower than the normal air fuel ratio, and that the ignition detecting circuit is adapted to switch the air fuel ratio from the low air fuel ratio condition to the normal air fuel ratio condition when ignition is detected.

Preferred embodiments are defined in the dependent patent claims.

According to the above-described construction, as only the electromotive force of the sensor itself is used as an ignition signal, and as the ignition is effected in the low M value condition so that the sensor largely changes its output to ensure the ignition detection of the burner, the construction is more economical and the price is lower without the power consumption due to application of a voltage to the sensor and the costs due to the addition of a stabilizing power circuit. In addition, the present invention has the advantage in that ignition errors hardly occur and positive ignition is ensured, because the ignition is performed at a low M value, i.e., at dense mixed gas.

Also as the sensor is preheated in advance by a preheater and is ignited in a low M value, the sensor produces a large electromotive force simultaneously with the ignition of the burner to immediately detect the ignition and to switch the value to a normal M value. Accordingly, the amount of the carbon monoxide or the like produced during the ignition detection becomes extremely small, which ensures the higher safety.

Furthermore, as the voltage is adapted to be applied upon the sensor after the lapse of the given time without being applied upon the sensor at the burner ignition, the output from the sensor abruptly changes because of change in the inner resistance when an accidental fire occurs in the burner. Accordingly, the accidental detection can be performed by the use of the output change and a combustion apparatus high in safety is be provided.

Brief description of the drawings

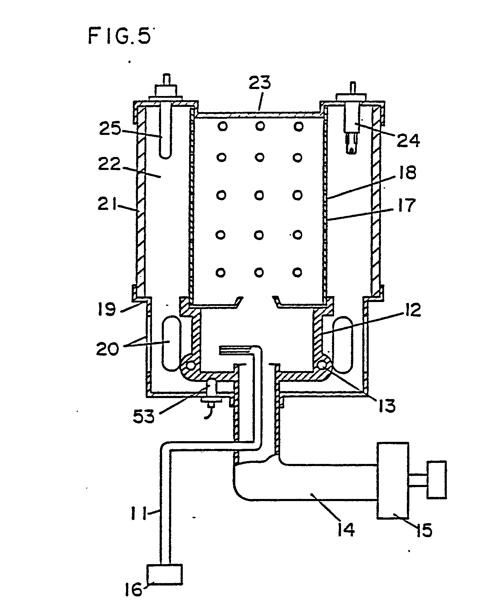

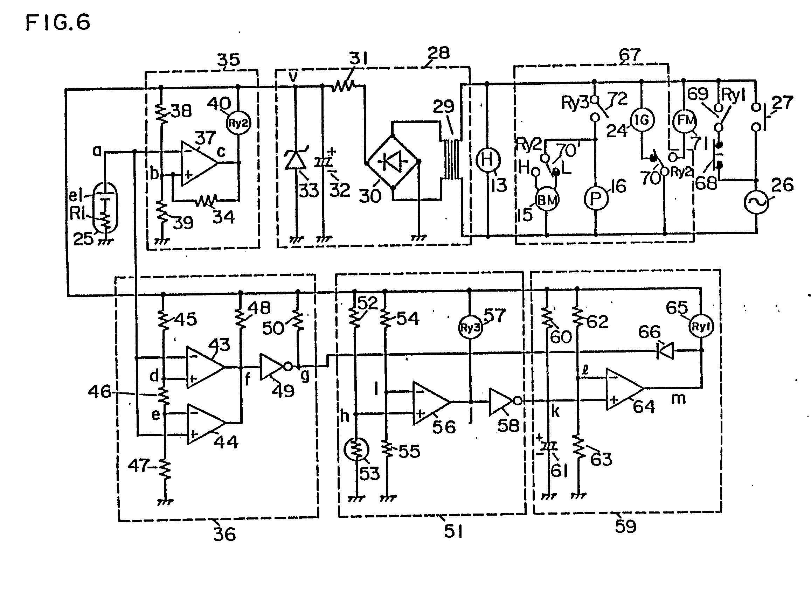

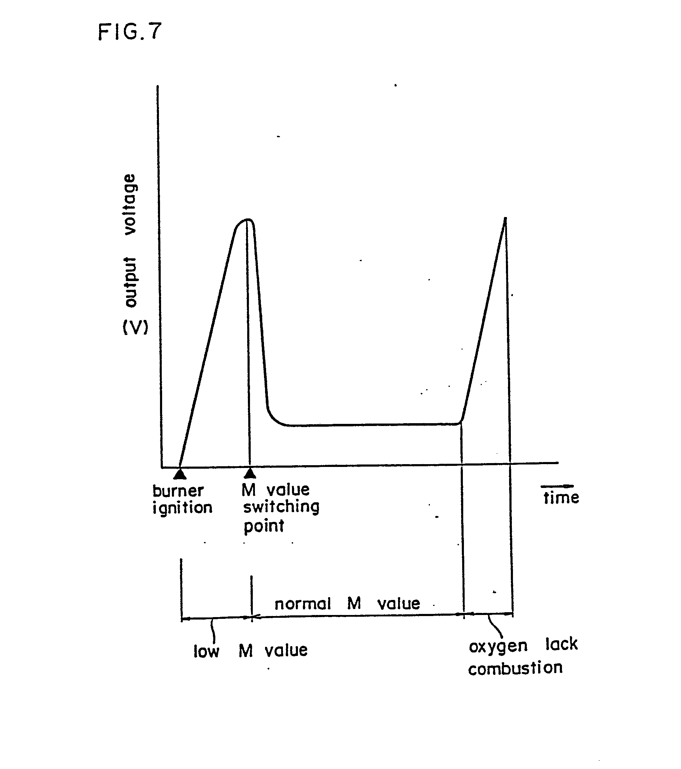

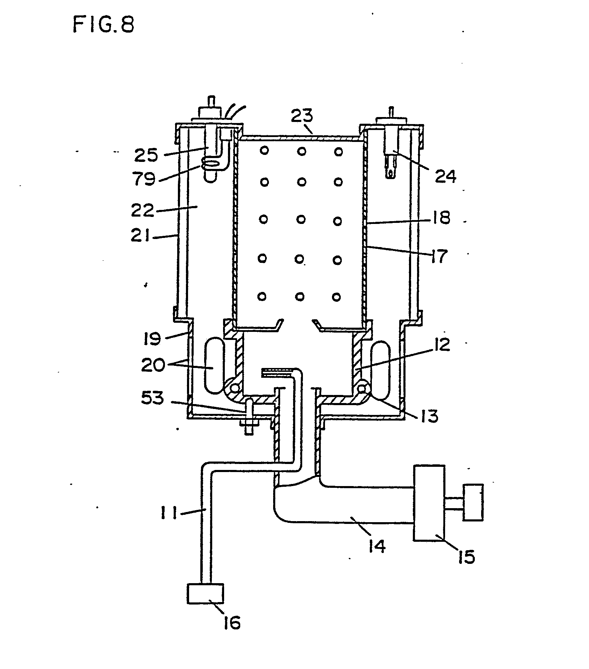

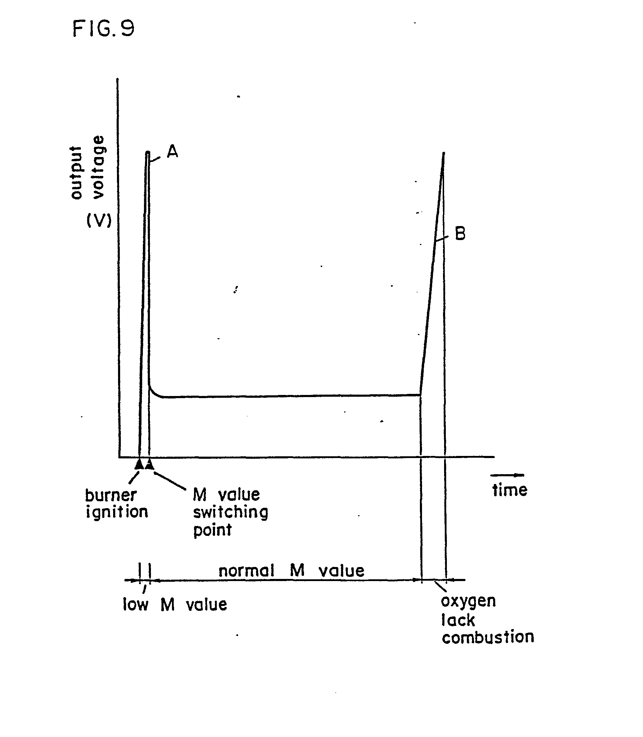

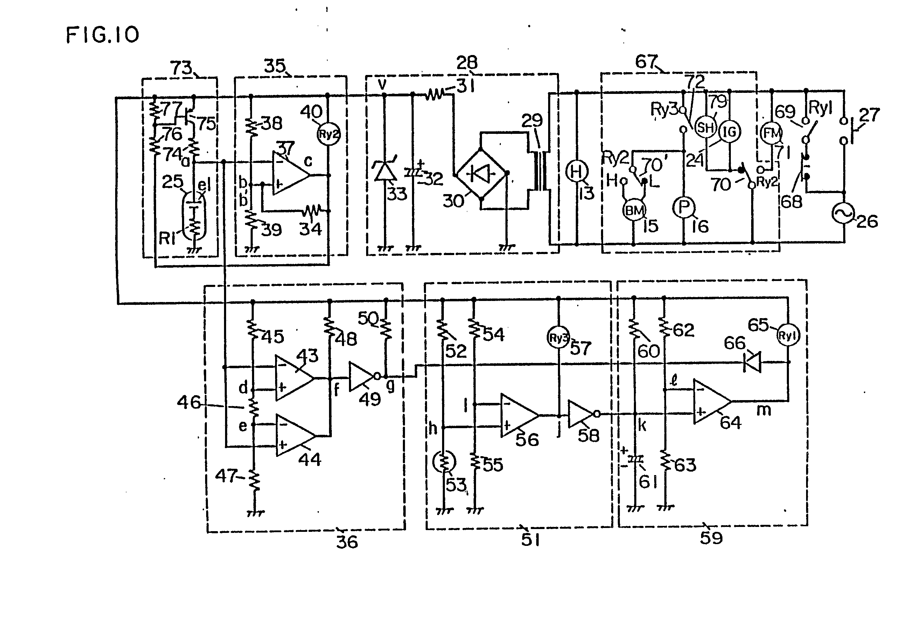

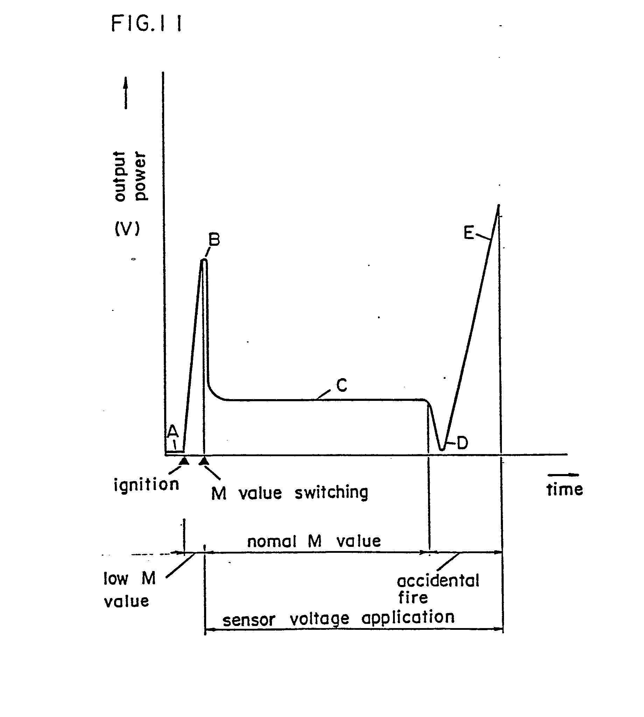

Fig. 1 is a characteristic graph of the output of an oxygen concentration cell type sensor for detecting incomplete combustion. Fig. 2 is a temperature characteristic graph of the sensor. Fig. 3 is a circuit diagram for conventional incomplete combustion detection and ignition detection. Fig. 4 is a characteristic chart of the sensor output in the same circuit. Fig. 5 is a cross-sectional view of a combustion apparatus used in a first embodiment of the present invention. Fig. 6 is a circuit diagram of the first embodiment. Fig. 7 is an output characteristic chart of the sensor in the first embodiment. Fig. 8 is a cross-sectional view of a combustion apparatus of a second embodiment of the present invention. Fig. 9 is an output characteristic chart of the second embodiment. Fig. 10 is a circuit diagram of a third embodiment of the present invention. Fig. 11 is an output characteristic chart of the sensor of the third embodiment.

Best mode for carrying out the invention

The embodiment of the invention will be described hereinafter with reference to the drawings. Fig. 5 shows one example of a combustion apparatus of petroleum as fuel, wherein 11 is a fuel pipe, 12 is a vaporizing pipe for vaporizing the fuel from the fuel pipe 11, 13 is a heater for preheating the vaporizing pipe 12, 14 is a blowing pipe for feeding the air for combustion use into the vaporizing pipe 13, 15 is a blower, 16 is a fuel pump, 17 is a burner pipe disposed on the vaporizing pipe, 18 is a through hole formed in the burner pipe, 19 is an exhaust pipe disposed to surround the outer periphery of the vaporizing pipe 12, 20 is an exhaust port, 21 is a heat-proof heat transmission pipe, 22 is a combustion chamber formed between the heat-proof heat transmission pipe 21 and the burner pipe 17, 23 is a cover unit covering the burner pipe 17 and the heat-proof heat transmission pipe 21, 24 is an igniter mounted on the cover unit 23, 25 is a sensor mounted on the cover unit 23 for detecting incompletion combustion.

The sensor 25 made of zirconia $(XrO_2)$ is an oxygen concentration cell type sensor for producing an electromotive force dependent on changes in the oxygen concentration and is adapted to detect the ignition of the burner and the incomplete combustion.

A concrete circuit for detecting the ignition and incomplete combustion of the burner will be described with the use of Fig. 6. 26 is an AC power supply, which is connected to a power supply transformer 29 of a power supply circuit 28 through an operation start switch 27. The power supply circuit 28 has the output of the transformer 29 rectified by a diode bridge 30 and is smoothed and made constant in voltage by a resistor 31, a capacitor 32, a constant voltage diode 33, and feeds DC power to each type of control circuit. The output potential a of the sensor 25 is fed to an ignition detecting circuit 35 and a combustion condition detecting circuit 36. The potential a is inputted to a negative input terminal of a comparator 37 of the ignition detecting circuit 35 and is compared with the partial voltage potential b of the resistors 38, 39 connected to the positive input terminal to produce an output c. The output c of the comparator 37 is connected to the power supply circuit 28 through the coil 40 of a relay Ry 2, and is connected to the potential b through a positive feedback resistor 34. The combustion condition detecting circuit 36 compares the output potential a of the sensor 25 with potentials d, e, respectively, divided in voltage through the resistors 45, 46, 47, by a comparator 43, thereby constituting a window comparator circuit. The output f of the comparators 43, 44 is pulled up by the resistor 48 and is inputted to the inverter circuit 49 thereby producing the output potential g. 51 shows a preheating circuit for the heater 13 for preheating the vaporizing pipe 12 (Fig. 5). The division-voltage potential h of a resistor 52 and a temperature sensor 53 a negative characteristic temperature-sensing resistance element is used) of the vaporizing pipe 12 is compared with the division-voltage potential i of resistors 54, 55 thereby providing an output potential j. The output j of the comparator 56 is connected to the power supply circuit 28 through the coil 57 of a relay Ry 3 and is inputted to an inverter circuit 58. The output of the inverter circuit 58 is connected to the connection point k of a resistor 60 and a capacitor 61 of a timer circuit 58. The timer circuit 59 compares the potential k with the division-voltage l of the resistors 62, 63 by a comparator 64, and the output m is connected to the coil 65 of the relay Ry 1 and to the anode of the diode 66. The cathode of the diode is connected to the output potential g of the combustion condition detecting circuit 36.

An igniting circuit 67 is connected to the AC power supply 26. The igniting circuit 67 is supplied with power by a series circuit of an operation start switch 27, a stop switch 68 and a contact 69 of the relay Ry 1 in series being connected in parallel to it. An igniter 24 is connected to the normally-closed side of a first contact 70 of the relay Ry 2 and a motor 71 for driving a blowing fan (not shown) of the hot air is connected with the normally-open side. A fuel pump 16 and a blower 15 for combustion use are connected to the contact 72 of the relay Ry 3. The blower 15 for combustion use allows the Hi—Lo switching operation of the blowing amount to be effected, which is switched by a second contact 70′ of the relay Ry 2. 13 shows a heater for preheating the vaporizing pipe 12. The comparators 37, 43, 44, 56, 64 described here are of generally known type having two inputs and an open collector output, the inverter circuits 49, 58 also use inverters of the open collector output type.

Now, the operation will be described. Upon depression of the operation switch 27, the heater and the power supply circuit 28 are energized, and the power is fed to the preheating circuit 51 and the timer circuit 59. The sensor 25 is shown equivalent to an inner resistor $R_i$ and an electromotive force $e_i$.

As at first, the atmosphere temperature of the sensor is equal to room temperature, the inner resistor $R_i$ is as large as several hundred megohms and the electromotive force $e_i$ is zero. Thus, a potential a becomes smaller than the reference potential b, and the output c of the comparator 37 becomes high potential. As the comparator 37 has an open collector output as described hereinabove, the output high potential means open circuit and the coil 40 of the relay Ry 2 is not energized. Accordingly, both the contacts 70, 70′ are retained at the normally-closed side and the igniter 24 is energized. At this time, the electric potential b is determined by the voltage divider consisting of resistor 38, the impedance of the coil 40 of the relay Ry 2, resistor 34 and resistor 39.

In the preheating circuit 51, the resistance value of the temperature sensor 53 becomes larger so that the potential h becomes larger than potential i because of the low temperature of the initial evaporator, the output j of the comparator 56 has high potential, and the relay Ry 3/57 is not energized either. Thus, the pump 16 and the blower 15 are not operated. At the same time, the output of the inverter 58 becomes low potential to prevent the capacitor 61 of the timer circuit 59 from being charged. Accordingly, the potential k becomes almost zero volt and the output m of the comparator 64 becomes low potential, because the electric potential k is smaller than l. Therefore, the relay Ry 1 is energized and the power keeps feeding by a contact 69 if the operation switch 27 is released. Namely, at the early stage, the heater 13 and the igniter 24 operate to perform the heating operation.

As the temperature of the evaporizing pipe 12 rises and the resistance value of the temperature sensor 53 drops, the electric potential h drops to approach the potential i. The potential i is designed to become equal to the potential h at a time when the temperature of the evaporizing pipe has reached a value at which the fuel can be evaporated, and the comparator 56 becomes low output potential when the potential h has become smaller than or equal to the potential i, to energize the relay Ry 3. The fuel pump 16 and the blower 15 are operated. As the relay Ry 2 is not yet operated, the blower 15 delivers only a lower amount and the fuel to be fed from the fuel pump 16 causes the air amount to be lower than the required air amount. Namely, it is a low M value at which dense mixed gas is fed to improve the ignition performance. When the output j of the comparator becomes a low potential, the inverter 58 becomes high output potential (open circuit), and the capacitor 61 of the timer circuit 59 begins to be charged through a resistor 60. When the burner is not ignited for some reasons, the comparator 64 becomes high output potential at a time point, when the potential k has become larger than l or equal to l because of the charging of the capacitor 61, to cut off the relay Ry 1 to stop the operation. When the burner is ignited, before the potential k becomes larger than l or equal to l, to have normal combustion, the coil of the relay Ry 1 is energized through a diode 66 to be described later, and continues its conduction, even if the output m of the comparator 64 becomes high potential, to cause the combustion to be continued.

When the burner has been ignited before the timer circuit 59 turns off the relay Ry 1, the atmosphere temperature of the sensor 25 rises through the heating operation of the burner so that the sensor 25 can begin its detecting operation. The sensor 25, which is an oxygen concentration cell, produces electromotive force in accordance with the oxygen density in the combustion exhaust gas when the atmosphere temperature of the sensor has reached the sensor operation temperature. Namely, a electromotive force of about 0.8 V is produced when the air amount (low M value) has become less than the theory air amount of the burner, and the electromotive force becomes almost zero when the air has become excessive.

As the ignition of the burner is performed through the supply of the mixed air at a low M value as described hereinabove, the combustion condition becomes a kind of incomplete combustion, and the sensor senses it as shown in Fig. 7 to output the electromotive force $e_i$. Namely, the electromotive force is present, when the burner has been ignited, to allow the ignition detection to be performed. And the ignition detecting circuit 35 detects the electro-motive force to cause the combustion to move into the normal M value condition. Namely, when the electromotive force

$e_i$ of the sensor 25 becomes higher than the potential b of the ignition detecting circuit 35, the output c of the comparator 37 becomes low output potential to energize the coil 40 of the relay Ry 2. The contact 70 is switched from the normally-closed side to the normally-open side to stop the operation of the igniter 24 to drive the fan motor 71, thereby releasing the hot air into the room. Simultaneously, the contact 70' of the relay Ry 2 is also switched onto the normally-open side to turn the blower motor 15 into Hi airflow. Namely, the combustion airflow is adapted to the supply fuel of the pump 16, and the combustion moves to the normal M value combustion. Although the burner returns to the normal M value combustion and the electromotive force $e_i$ of the sensor 25 also lowers, the output c retains low potential by the positive feedback resistor 34 of the comparator 37. The comparator 37 becomes low output potential, and simultaneously the potential b' becomes the partial potential of the voltage divider (consisting of the resistor 39, the parallel resistance of the resistor 34, and the resistor 38) and becomes a sufficiently low value as compared with the b potential at a time when the output c of the comparator 37 is at high potential. If the electromotive force $e_i$ of the sensor 25 lowers, the output c retains low potential to keep the potential a larger than b'.

The combustion condition detecting circuit 36 compares a potential equal to the electromotive force $e_i$ of the sensor 25 with potential d and e by comparators 43, 44 to detect the combustion condition, thereby stopping the combustion when the incomplete combustion is occurred.

In the above-described embodiment, the description was given in an example composed of electronic circuits, but these combustion sequences can be easily realized if they are composed of a program and in this case, the circuit construction is simplified and highly precise control, complicated control sequence can be easily realized. Also, the blower 15 switches the Hi—Lo air amount by the revolution number of the motor. The air amount can be also performed easily by a wind passage switching system through a dipper or the like. Also, the burner with petroleum as fuel was described, but a burner with gas as fuel provides similar effect.

Fig. 8 shows a second embodiment of the present invention, which is different from the above-described embodiment in that a preheating heater 79 is provided for heating the sensor 25 in advance before the combustion start. Although a circuit diagram is not shown, the preheating heater 79 is to be electrically connected in parallel to the ignition transformer 24.

In this operation, as the burner is ignited at a low M value as described hereinabove, the burner starts in a mode of incomplete combustion simultaneously with the ignition, and the sensor 25 detects this state by the electromotive force. The sensor 25 is, however, heated in advance by a preheating heater 79 into its working condition so that a large electromotive force is produced simultaneously with the ignition of the burner as shown in Fig. 9A. Accordingly, the ignition detection is momentarily performed. The ignition detecting circuit 35 detects the large electromotive force of the sensor 25 to move the combustion to the normal M value as described hereinabove, but as the sensor 25 is adapted to be sufficiently heated with the heat from the burner at this time, the current flowing to the preheating heater 79 is turned off to save the energy.

When an abnormal combustion as incomplete combustion or the like is caused, the output potential a of the sensor 25 rises abruptly as shown in Fig. 9B, and the comparators 43, 44 of the combustion condition detecting circuit 36 detect it to energize the relay 65 through an inverter 49 and a diode 66 to turn off the relay contact 69, thereby stopping the combustion.

It is to be noted that a heater type igniter is used as an igniter 24 and is provided close to the sensor 25 so that the sensor 25 may be preheated with the igniter 24.

A third embodiment of the present invention will be described with reference to Fig. 10. In the present embodiment, voltage is not applied to the sensor at the ignition time, but the voltage is adapted to be applied to the sensor after the given time period. Namely, in Fig. 10, 73 shows a sensor circuit which obtains the output of the sensor 25, and a series resistor 74, a switching transistor 75 are connected in series with the sensor, and the base of the transistor 75 is connected to the output c of the comparator 37 of the ignition detecting circuit 35 through a resistor 76. 77 shows an emitter base resistor of the transistor 75. Also, the preheating heater 79 is connected in parallel to the igniter 24.

The operation will be described hereinafter. When the operation switch 27 is actuated the heater 13 and the power supply circuit 28 are energized to feed power to the ignition detecting circuit 35, the combustion condition detecting circuit 36, the preheating circuit 51 and the timer circuit 59.

As the atmosphere temperature of the sensor is, at first, equal to the room temperature, the inner resistance Ri is as large as several hundreds megohms, and the electromotive force $e_i$ is also zero as shown in Fig. 7A. Thus, potential a is smaller than reference potential b, and the output c of the comparator 37 becomes high potential. As the comparator 37 has an open collector output as described hereinabove, high output potential corresponds to open circuit, so that no current flows to the relay Ry 2 coil 40. Hence, both contacts 70, 70' are maintained at the normally-closed side and the preheating heater 79 of the igniter 24 and the sensor 25 are energized.

Also, in the preheating circuit 51, the resistance value of the temperature sensor 53 is large because of the low temperature of the initial vaporizing pipe, the potential h becomes larger than potential i, the output i of the comparator 56 is at high potential, and the relay Ry 3 57 is not energized. Accordingly, the pump 16 and the blower 15 do not operate. At the same time, the output of the inverter 58 becomes low potential to prevent the capacitor 61 of the timer circuit 59 from being charged. The potential k becomes almost zero in voltage, and the output m of the comparator 64 becomes low potential, because the potential k is smaller than l. Consequently, the relay Ry 1 is energized to keep feeding the power with the contact 69 even if the operation switch 27 is released. At the early stage, the heater 13, the igniter 24 and the heater 79 for sensor use are operated to perform the preheating operation.

As the temperature of the vaporizing pipe 12 rises and the resistance value of the temperature sensor 53 lowers, the potential h lowers and approaches the potential i. The potential i is designed to become equal with the potential h available at a temperature of the vaporizing pipe wherein the fuel can be vaporized. When the potential h has become smaller than or equal to potential i, the comparator 56 becomes low potential in output to energize the relay Ry 3. Thus, the fuel pump 16 and the blower 15 operate. As the relay Ry 2 does not operate, the blower 15 becomes low in air amount and the air amount is smaller than the air amount required for the fuel fed by the fuel pump 16. The mixed gas which is of a low value and is dense is fed to improve the ignition performance. At the same time, the output c of the comparator 37 is high potential and thus the transistor 75 of the sensor circuit 73 does not conduct so that the power from the power supply circuit 31 is not fed to the sensor 25. Accordingly, the comparator 37 keeps detecting only the electromotive force $e_i$ of the sensor 25 when the output j of the comparator 56 becomes low potential, the inverter 58 becomes high output potential (open circuit), the charging operation starts through the resistor 60 into the capacitor 61 of the timer circuit 59, and the comparator 64 becomes high potential in output, at a time point when the potential k has become larger than l or has become equal to l, to energize the coil 65 of the relay Ry 1 to open the contact 69 thereby stopping the operation.

When the burner has been ignited before the timer circuit 59 turns off the current to the coil 65 of the relay Ry 1, the combustion condition detecting circuit 36 compares and decides from the output of the sensor 25 to keep flowing the current to the coil 65 of the relay Ry 1 through the diode 66 to continue the combustion. At this time, the sensor 25 produces an electromotive force momentarily to shorten the ignition detection. Namely, as the burner is ignited at a low value M as described hereinabove, the burner is at a state of incomplete combustion simultaneously with the ignition, and the sensor 25 detects it to produce the electromotive force. But as the sensor 25 is heated in advance by the preheating heater 73 and becomes workable as described hereinabove, the large electromotive force is produced simultaneously with the ignition of the burner as shown in Fig. 11B. Accordingly, the ignition detection is momentarily performed.

When the ignition detecting circuit 35 detects the large electromotive force of the sensor 25 (higher than the potential b) produced in such a manner as described hereinabove, the output of the comparator 37 becomes low potential to energize the coil 40 of the relay Ry 2. Hence, the contact 70' is switched onto the normally-open side to bring the blower 15 into the Hi air amount position. Namely, the combustion air amount suitable for the supply fuel of the pump 16 is raised for normal combustion to provide a condition wherein carbon monoxide or the like is not produced. At the same time, the contact 70 of the relay Ry 2 is also switched from the normally-closed side to the normally-open side to stop the operation of the igniter 24, to drive a fan motor 71 thereby releasing hot air into the chamber. At this time, the sensor 25 has been sufficiently heated with the heat from the burner, and thus the current flowing to the preheating heater 79 for heating the sensor 25 is turned off to save power. Also, as the output c of the comparator 37 becomes low potential, the base current of the transistor 75 flows through the resistor 76 to cause the transistor 75 conductive. A series resistor 74 is connected in series with the sensor 25 and the current flows from the power supply circuit 28 to the sensor 25. But at this time, the temperature of the sensor 25 has been sufficiently risen, and thus the inner resistor Ri is of extremely small value as compared with the series resistor 74. The partial potential of the voltage divider (resistor 74 and inner resistor Ri) is almost zero, and the potential a becomes a condition where only the output of the electromotive force $e_i$ of the sensor 25 remains as shown in Fig. 11C.

When the burner has suddenly had an accidental fire for some reasons, the sensor 25 outputs momentarily an abornal signal, but it is considered that an abnormal signal D is not produced depending upon the accidental fire conditions. Even if the abnormal signal is outputted, it is only momentary so that it may not be detected by the detecting circuit.

However, according to the embodiment of the present invention, as the current flows through the resistor 74 to the sensor 25 after the ignition detection by the sensor circuit 73 as described hereinabove, the inner resistance Ri suddenly rises due to the temperature drop of the sensor 25 even if the electromotive force $e_i$ is not developed during the burner accidental fire, so that the voltage divider potential of the series resistor 74 to be caused by the voltage application becomes a value (Fig. 11E) larger than the electromotive force $e_i$. Thus, during the burner accidental fire, the potential from the sensor 25 with respect to the potential d of the combustion condition detecting circuit 36 becomes $a \geqq d$ to detect the accidental fire, and the relay 65 operates through the comparator 43, the inverter 49 and the diode 66 to open the contact 69 and to stop the operation.

It is to be noted that although not shown, the voltage application upon the sensor 25 may be automatically applied after the lapse of a given time period independently of the ignition detection.

Industrial applicability

In combustors such as petroleum fan heater or the like as an individual indoor heating apparatus, carbon monoxide is prevented from being produced in large amount through incomplete combustion, thus improving the safety. In addition, the accidental fire is positively detected to further increase the safety.

**Claims**

1. A combustion apparatus comprising a burner, an oxygen concentration cell type of sensor (25) for detecting the combustion condition of the burner, an igniting circuit (24, 67) for igniting said burner, an ignition detecting circuit (35) for detecting the output of the sensor itself as an indication of the ignition of said burner, characterized in that the igniting circuit (24, 67) is adapted to ignite the burner at an air fuel ratio lower than the normal air fuel ratio, and that the ignition detecting circuit (35) is adapted to switch the air fuel ratio from the low air fuel ratio condition to the normal air fuel ratio condition when ignition is detected.

2. A combustion apparatus in accordance with claim 1, wherein the ignition is detected by the ignition detecting circuit (35) solely on the basis of the electromotive force (ei) of the sensor (25).

3. A combustion apparatus in accordance with claim 1 or 2, wherein the sensor (25) is adaped to be preheated by a preheating heater (79) in advance before ignition.

4. A combustion apparatus in accordance with claim 3, wherein the preheating heater (79) is adapted to a preheating operation for only a constant time period before and after the ignition of the burner.

5. A combustion apparatus according to claim 1 or 2, characterized by a circuit (74—77) for applying an operating voltage to the sensor (25) after the igniton detecting circuit (35) has detected ignition of the burner.

**Patentansprüche**

1. Heizvorrichtung mit einem Brenner, einem Sauerstoffkonzentrationszellensensor (25) zum Feststellen des Verbrennungszustandes im Brenner, einer Zündeinrichtung (24, 67) zum Zünden des Brenners und einer Zünddetektorschaltung (35), die bei einer Leistungsabgabe des Brenners dies als eine Anzeige der erfolgten Zündung des Brenners wertet, dadurch gekennzeichnet, daß die Zündeinrichtung (24, 67) den Brenner bei einem niedrigerem Luft-Brennstoff-Verhältnis als dem normalen Luft-Brennstoff-Verhältnis zündet und daß die Zünddetektorschaltung (35) das Luft-Brennstoff-Verhältnis von dem niedrigerem Verhältnis auf das normale Verhältnis zurückschaltet, wenn die Zündung festgestellt wurde.

2. Heizvorrichtung nach Anspruch 1, dadurch gekennzeichnet, daß die Zündung durch die Zünddetektorschaltung (35) nur aufgrund der EMK (ei) des Sensors (35) festgestellt wird.

3. Heizvorrichtung nach Anspruch 1 oder 2, dadurch gekennzeichnet, daß der Sensor (25) vor der Zündung durch eine Vorheizvorrichtung (79) vorgeheizt wird.

4. Heizvorrichtung nach Anspruch 3, dadurch gekennzeichnet, daß die Vorheizvorrichtung (79) nur für eine bestimmte Zeit vor und nach der Zündung des Brenners vorheizt.

5. Heizvorrichtung nach Anspruch 1 oder 2, gekennzeichnet durch eine Schaltungsanordnung (74—77) zum Zuführen einer Betriebsspannung an den Sensor (25) nachdem die Zünddetektorschaltung (35) das Zünden des Brenners festgestellt hat.

**Revendications**

1. Appareil de combustion comprenant un brüleur, un capteur (25) du type d'une pile de concentration d'oxygène, destiné à détecter l'état de combustion du brüleur, un circuit d'allumage (24, 67) destiné à allumer le brüleur, et un circuit (35) de détection d'allumage destiné à détecter le signal de sortie du brüleur lui-même comme indication de l'allumage du brüleur, caractérisé en ce que le circuit d'allumage (24, 67) est destiné à allumer le brüleur pour un rapport air-combustible inférieur au rapport air-combustible normal, et en ce que le circuit (35) de détection d'allumage est destiné à commuter le rapport air-combustible de l'état à faible rapport air-combustible à l'état à rapport air-combustible normal lorsque l'allumage est détecté.

2. Appareil de combustion selon la revendication 1, dans lequel l'allumage est détecté par le circuit (35) de détection d'allumage uniquement d'après la force électromotrice (ei) du capteur (25).

3. Appareil de combustion selon la revendication 1 ou 2, dans lequel le capteur (25) est destiné à être préchauffé par un dispositif (79) de préchauffage avant l'allumage.

4. Appareil de combustion selon la revendication 3, dans lequel le dispositif de préchauffage (79) est destiné à assurer une opération de préchauffage uniquement pendant une période constante avant et après l'allumage du brüleur.

5. Appareil de combustion selon la revendication 1 ou 2, caractérisé par un circuit (74—77) destiné à appliquer une tension de travail au capteur (25) après que le circuit (35) de détection d'allumage a détecté l'allumage du brüleur.

FIG. I

FIG.2

sensor temperature

1

FIG.3

a ∘
output
b ∘

2

3

ei

I

Ri

FIG.4

output voltage (V)

A

B

C

A'

B'

burner ignition

time

combustion

accidental fire

FIG.5

FIG.6

FIG.7

burner
ignition

M value
switching
point

time

normal M value

low M value

oxygen lack
combustion

FIG.8

FIG.9

output voltage (V)

A

B

time

burner ignition

M value switching point

low M value

normal M value

oxygen lack combustion

FIG.10

FIG.11

0 144 433

9